# EUROPEAN PATENT APPLICATION

(11) **EP 0 582 731 A1**
(43) Date of publication of application: **16.02.1994**
(21) Application number: 92113694.1
(22) Date of filing: 11.08.1992
(51) Int. Cl.: B25J 13/08

(54) **A gripper device with tactile sensitivity particularly for a robot**

(71) Applicant: LEDA Logarithmic Electrical Devices for Automation S.r.l., I-10121 Torino (IT)
(72) Inventor: Lazzaroni, Domenico, I-10100 Torino (IT)
(74) Representative: Plebani, Rinaldo

(57) **Abstract**

A gripper device (3) for a robot (1) is described which has tactile sensitivity usable both to effect recognition of a grip/no grip condition and recognition of the shape of an object (5) gripped; at least part of a gripping surface (11) of the gripper device which is intended to contact a component to be gripped in use is covered with a layer (12) of electrically-conductive elastomeric material whose electrical resistance can vary in dependence on its state of compression.

## Description

The present invention relates to a gripper device with tactile sensitivity adapted to be fitted to a robot or other like automatic handling device.

In the field of devices for the gripping and automatic handling of components, it is known that there is a dual problem of confirming to the central control unit for the device that gripping (or not) of the component to be manipulated has occurred (that is of effecting a first check of grip/non grip type) and of recognising the type of object gripped, for example from among a particular series of different objects (that is of checking the shape of the object gripped).

These functions are currently carried out by, for example, microswitches or by optical sensors which read a suitable code carried by the pieces to be handled. Both these systems however have disadvantages: microswitches are expensive, difficult to install in the handling device, do not always guarantee correct signalling and are subject to damage, for example during gripping which is not entirely correct. Optical sensors, in addition to having similar disadvantages, have the further disadvantage of requiring the application of a suitable code to the pieces to be handled, which, inter alia, is not always possible.

The object of the invention is to provide a gripper device for robotised apparatus which has tactile sensitivity such as to enable both types of check described above to be carried out simply, economically, safely and without risk of damage to the sensor elements.

This object is achieved by the invention which relates to a gripper device with tactile sensitivity, particularly for a robot, of the type including at least two jaws which are reciprocally movable together/apart and which each have a respective gripping surface intended to contact a member to be gripped in use, characterised in that at least part of the gripping surface of each jaw is covered with a layer of electrically-conductive elastomeric material whose resistance can vary in dependence on its state of compression.

For a better understanding of the invention, a non-limiting description of one embodiment thereof will now be given with reference to the appended drawings, in which:
Figure 1 is an axonometric view of a robotised handling device of known type provided with a gripper device according to the invention;
Figure 2 illustrates details of the gripper device of the invention in section and on an enlarged scale; and
Figures 3 and 4 illustrate the operation of the gripper device of the invention.

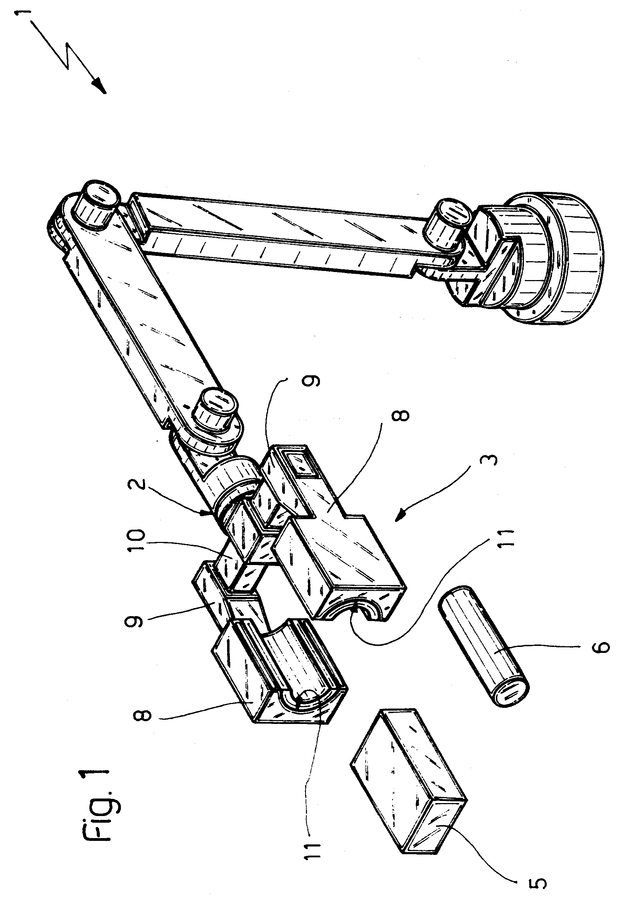

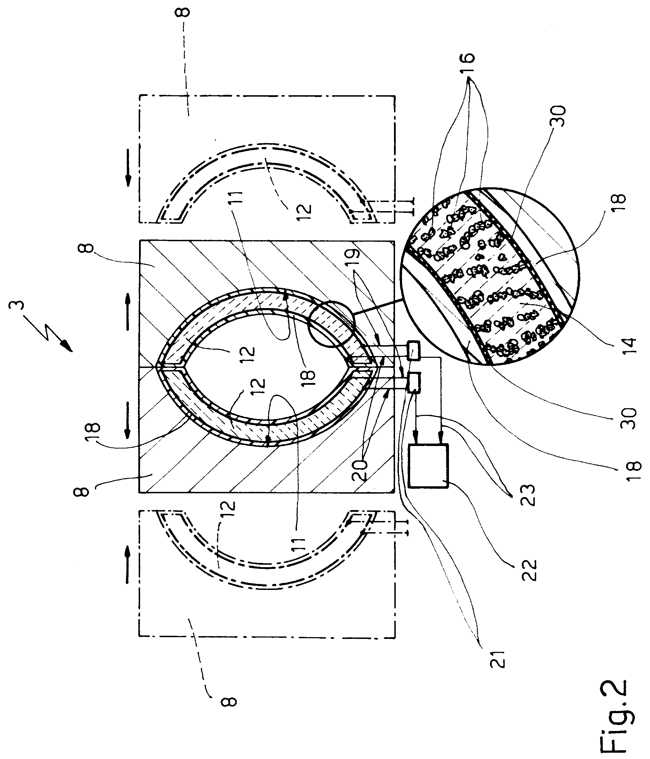

With reference to Figures 1 and 2, a robotised handling device or robot of known type is indicated 1 and has a wrist 2 provided with a gripper device 3 adapted to grip different objects, for example parallelepipedal components 5 and cylindrical components 6.

The gripper device 3 in fact comprises two opposing jaws 8 which are movable towards/away from each other, for example being carried by respective motor-driven carriages 9 of known type movable along a guide 10, each jaw 8 having a respective gripping surface 11 on its side facing the other jaw 8, intended, in use, to contact a component 5 or 6 to be gripped; in this particular case the gripping surfaces 11 are defined by a respective concave cylindrical surfaces maintained constantly facing each other by the system for moving the jaws 8.

In accordance with the invention, at least part of the gripping surfaces 8, in the non-limiting case illustrated the entirety of these surfaces 8, is covered with a layer 12 of an electrically conductive, elastomeric material of predetermined thickness whose electrical resistance can vary in dependence on its state of compression: such a material, as well as a method for its manufacture, are described in Italian Patents Nos 1206890, 1210777 and 1211401 in the name of the same applicant, the contents whereof are incorporated herein as regards the parts necessary simply for reference. As shown on an enlarged scale in Figure 2 (in each case the thickness of the layers 12 is shown out of scale compared with the other dimensions of the jaws 8) this material has the characteristic of including an elastically deformable, elastomeric matrix 14 which is not conductive, which is in a state of triaxial precompression and has a plurality of open cells, the cells not being visible in the drawings since they are filled by particles of electrically conductive material 16, which are uniformly distributed in the matrix 14 so as to form chains of particles strictly in contact with each other extending through the matrix itself.

Thus, when the material which forms the layer 12 is compressed, the particles 16 which are already in contact with each other even in the uncompressed layer 12, thus always ensuring that the layer 12 has a certain electrical conductivity, are pressed more firmly against each other and in greater numbers so that the electrical conductivity of the layer 12 is consequently increased in accordance with a predetermined law which is a characteristic of the material forming the layers 12.

In accordance with a further characteristic of the invention, each layer 12 covering the surfaces 11 is in turn coated externally, both on its side facing the respective jaw 8 and on its opposite side facing the piece 5, 6 to be gripped, with an electrically insulating film 18 and is connected electrically on opposite sides to respective wires 19, 20 with opposite polarities connected to respective known devices 21 (Figure 2) for measuring electrical resistance. These are in turn connected in known manner to a central electronic comparator control unit 22 of known type (for example the central control unit of the robot 1 itself) and supply it with a signal 23 proportional to the electrical resistance detected. In order to ensure that the devices 21 detect the resistance of the layers 12 correctly, the layers 12 themselves are each disposed in a pack between two flexible contact elements 30 which are essentially two dimensional (Figure 2), for example as electrically conductive sheet metal meshes, which are also enclosed within the insulating electrical film 18 and are in turn each connected electrically in known manner to a respective one of the wires 19, 20.

In a possible variant of the invention not illustrated for simplicity, a screen may be inserted between one of the electrically conductive elements 30 and its elastomeric conductive layer 12, the screen being constituted by an electrically non-conductive plate with a uniform arrangement of through-holes through which the layer 12, when deformed elastically by a compressive force applied thereto, can contact the conductive elements 30, the whole as described in Italian Patent No 1210778 by the same applicant, the content whereof is incorporated herein as regards the parts needed simply for reference.

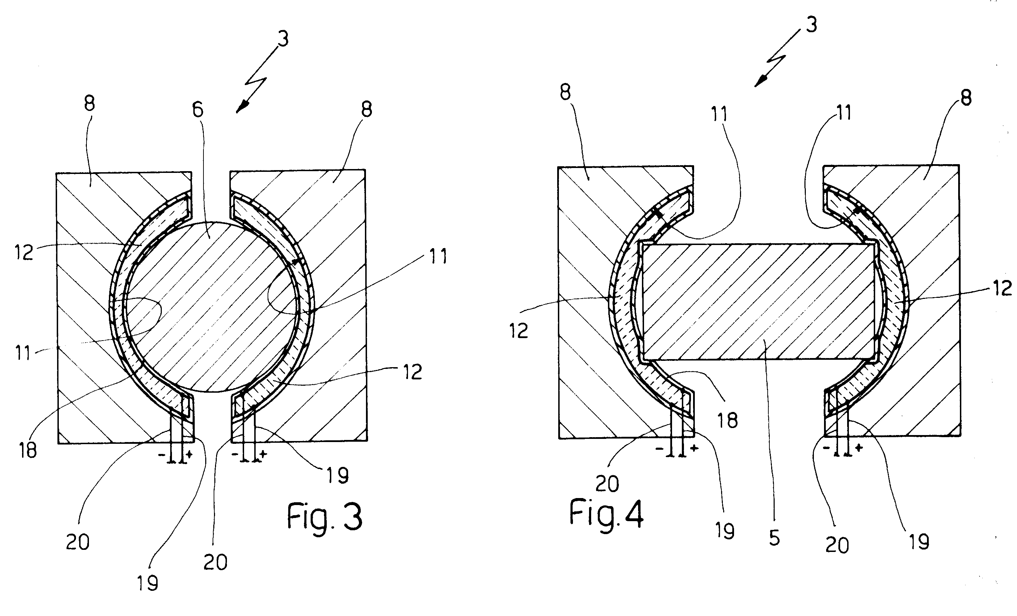

With reference now also to Figures 3 and 4, in use, the gripper device 3 is used to grip a mechanical component or piece of predetermined shape, for example a component 5 or 6: the gripping is effected first by arranging the jaws 8 in their open position, placing the object 5, 6 to be gripped between them, and then bringing the jaws 8 together to grip the object 5, 6 between the surfaces 11. When gripping has been effected, the object 5, 6 compresses the layers 12 covering the gripping surfaces 11; this, according to the characteristics of the material constituting each layer 12, causes a noticeable variation in the electrical resistance of the layer 12 which is detected by the respective device 21 which then sends a signal 21 to the central control unit 22. This, depending on the type and magnitude of the signal received, which is proportional to the electrical resistance measured, thus receives grip/no grip information according to whether the resistance of the layers 12 has varied, either falling below or possibly rising above a predetermined threshold. The signal received by the central control unit 22 being proportional to the pressure with which the jaws 8 clamp the piece 5, 6, this may also be used to determine the magnitude of this pressure, and consequently, to effect any adjustment, by means of a feed-back control cycle, of the pressure with which the piece is gripped by the gripper device 3, this being particularly useful when the pieces/components to be gripped are fragile; moreover, if the signals 23 which reach the central control unit 22 from the devices 21 connected to the layer 12 of each jaw 8 are different, this may be used by the central control unit to establish whether the piece has been gripped incorrectly or whether only one jaw 8 has operated correctly.

In the case of layers 12 modified in accordance with the variant described above but not illustrated, the grip/no grip signal is effectively an on/off signal in that, when the layers 12 are undeformed, an infinite electrical resistance (open switch) is detected since the layers 12 do not contact the underlying elements 30 because of the presence of the said screen; when, however, the layers 12 are deformed by the piece 5, 6 which is gripped between the surfaces 11, they contact the elements 30 through the holes in the screen and establish a conductive condition (switch closed).

As illustrated in Figures 3 and 4, when it is necessary to grip differently shaped pieces by means of the same device 3, such as the pieces 5 and 6 illustrated purely by way of non-limiting example, the gripping by the device 3 also enables the central control unit 22 to recognise simultaneously the type of piece gripped. In fact, if a piece 6 (Figure 3) is gripped, this will cause extensive deformation of the layers 12 but to a limited depth, with a consequent characteristic variation in the resistance of each layer 12, for example equal to R1; if a piece 5 is gripped (Figure 4), however, this causes a variation in the thickness of each layer 12 which is large but localised to the edges of the piece 6 with a consequent characteristic variation in the resistance of each layer 12, for example equal to R2, where R2 is different from R1. Thus, if these characteristic values are stored in the central control unit 22, by comparing these with the values detected by the devices 21 in use, this could determine whether a piece 5 or a piece 6 were gripped, all without the need to use premarked codes on the pieces.

In a further possible variant not illustrated for simplicity, the discrimination of the device 3 may be increased by dividing each layer 12 of each jaw 8 into a number of different portions which are insulated electrically from each other and connected separately through an equal number of wires 19, 20 to different devices 21 so that it is possible to pick up local variations in the electrical resistance of the layer 12 at different points on the respective gripping surface 11.

From what has been described, the advantages of the invention will be evident; on the one hand, the gripper device 3, is rendered sensitive by the presence of the layers 12 so that it can easily be detected whether or not an object to be picked up has been gripped and what type of object is gripped, the whole by simple comparisons of electrical resistance measurements; the sensitive members, constituted by the layers 12, are also insensitive to knocks, moisture and dust and hence, effectively, cannot break down. Moreover they are also extremely economical compared with conventional microswitches (which are not in any case able to fulfil the same functions) and compared with optical sensors (which in any case require codes to be applied to the pieces to be handled).

## Claims

1. A gripper device with tactile sensitivity, particularly for a robot, of the type including at least two jaws which are reciprocally movable together/apart and which have a respective gripping surface intended to contact a member to be gripped in use, characterised in that at least part of the gripping surface of each jaw is covered with a layer of electrically-conductive elastomeric material whose resistance can vary in dependence on its state of compression.

2. A gripper device according to Claim 1, characterised in that it includes two said opposed jaws, each of which has a gripping surface entirely covered with the said layer of electrically-conductive elastomeric material having a resistance which varies with its state of compression; the gripping surfaces being defined by respective concave cylindrical surfaces maintained permanently facing each other.

3. A gripper device according to Claim 1 or Claim 2, characterised in that the layer of electrically conductive elastomeric material whose electrical resistance can vary with its state of compression is coated externally with an electrically insulating film and is connected electrically on opposite sides thereof to respective wires with opposite polarities connected to respective electrical resistance measuring devices.

4. A gripper device according to Claim 3, characterised in that the electrical resistance measuring devices send a signal proportional to the electrical resistance detected to a central electronic comparator control unit.

5. A gripper member according to Claim 3 or Claim 4, characterised in that the layer of electrically conductive elastomeric material whose resistance can vary on variation of its state of compression is disposed in a pack between two flexible contact elements, for example metal meshes, which are also enclosed within the said electrically insulating film and are in turn connected electrically each to a respective wire.
